(19) Europäisches Patentamt European Patent Office Office européen des brevets

(11) **EP 4 207 734 A1**

(12) **EUROPEAN PATENT APPLICATION**
published in accordance with Art. 153(4) EPC

(43) Date of publication:
**05.07.2023 Bulletin 2023/27**

(21) Application number: **21879174.7**

(22) Date of filing: **10.09.2021**

(51) International Patent Classification (IPC):
**H04N 5/225** (2006.01)

(52) Cooperative Patent Classification (CPC):
**H04N 23/00; H04N 23/70; H04N 23/81**

(86) International application number:
**PCT/CN2021/117547**

(87) International publication number:
**WO 2022/078128 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.10.2020 CN 202011084864**

(71) Applicant: **Huawei Technologies Co., Ltd.
Shenzhen, Guangdong 518129 (CN)**

(72) Inventors:
• **YANG, Pan
Shenzhen, Guangdong 518129 (CN)**
• **ZHONG, Lei
Shenzhen, Guangdong 518129 (CN)**
• **WANG, Chao
Shenzhen, Guangdong 518129 (CN)**
• **LI, Yin
Shenzhen, Guangdong 518129 (CN)**

(74) Representative: **Grünecker Patent- und
Rechtsanwälte
PartG mbB
Leopoldstraße 4
80802 München (DE)**

(54) **IMAGE PROCESSING METHOD AND APPARATUS**

(57) This application provides an image processing method and apparatus that may be applied to vehicles such as an intelligent vehicle, a new energy vehicle, a connected vehicle, and an intelligent driving vehicle. The image processing method includes: obtaining a current frame image, where the current frame image includes a flickering line; determining, based on the current frame image, an interference source frequency that causes the flickering line; and adjusting an exposure time of a next frame based on the interference source frequency to obtain a next frame image that does not include a flickering line. Based on the image processing method in embodiments of this application, impact of an interference source on an image can be fundamentally avoided, thereby improving image quality.

300

| S310: Obtain a current frame image, where the current frame image includes a flickering line |
| --- |
| S320: Determine, based on the current frame image, an interference source frequency that causes the flickering line |
| S330: Adjust an exposure time of a next frame based on the interference source frequency to obtain a next frame image that does not include a flickering line |

FIG. 3

**Description**

This application claims priority to Chinese Patent Application No. 202011084864.8, filed with the China National Intellectual Property Administration on October 12, 2020 and entitled "IMAGE PROCESSING METHOD AND APPARATUS", which is incorporated herein by reference in its entirety.

**TECHNICAL FIELD**

This application relates to the image processing field, and more specifically, to an image processing method and apparatus.

**BACKGROUND**

Among common image sensors, complementary metal oxide semiconductor (complementary metal oxide semiconductor, CMOS) image sensors are widely used because a CMOS image sensor has features such as flexible image capture, high sensitivity, and low power consumption. However, an exposure manner used by the CMOS image sensor is progressive exposure. If different energy is received between different rows, an obtained image shows periodic bright and dark stripes, that is, flickering lines appear. If the image has flickering lines, quality of the image is degraded.
In the conventional technologies, a flicker correction manner is usually used to correct an image frame by frame to remove flickering lines in the image. Although image quality can be improved to some extent through flicker correction performed frame by frame, the image quality in this case is still different from image quality without interference.
Therefore, how to improve image quality is an urgent technical problem to be resolved.

**SUMMARY**

This application provides an image processing method and apparatus, to improve image quality.
According to a first aspect, an image processing method is provided, including: obtaining a current frame image, where the current frame image includes a flickering line; determining, based on the current frame image, an interference source frequency that causes the flickering line; and adjusting an exposure time of a next frame based on the interference source frequency to obtain a next frame image that does not include a flickering line.
In this embodiment of this application, if the current frame image has the flickering line, the interference source frequency that causes the flickering line may be determined based on the current frame image, and then the exposure time of the next frame image is adjusted based on the interference source frequency, so that the next frame image does not include the flickering line. Therefore, impact of an interference source on an image can be fundamentally avoided, thereby improving image quality.
With reference to the first aspect, in some implementations of the first aspect, the adjusting an exposure time of a next frame based on the interference source frequency to obtain a next frame image that does not include a flickering line includes: adjusting the exposure time of the next frame based on the interference source frequency to meet the following formula:

$$T_{AE} = \frac{n}{2f}$$

Herein, $T_{AE}$ is the exposure time of the next frame, $f$ is the interference source frequency, and n is a positive integer.
It should be understood that a flicker can be avoided when the exposure time is adjusted to be an integral multiple of a light energy period. The light energy period is a reciprocal of a light energy frequency. The light energy frequency is twice the interference source frequency.
Therefore, in this embodiment of this application, the exposure time of the next frame is adjusted to meet the

$$T_{AE} = \frac{n}{2f}$$

formula                , to be specific, the exposure time of the next frame to be the integral multiple of the light energy period, so that a flickering line can be avoided in the next frame image, thereby improving image quality.
With reference to the first aspect, in some implementations of the first aspect, the method further includes: obtaining an exposure time of a current frame; and adjusting the exposure time of the next frame based on the interference source frequency, so that an absolute value of a difference between the exposure time of the current frame and the exposure time of the next frame is less than or equal to a first threshold.

It should be understood that the smaller absolute value of the difference between the exposure time of the current frame and the exposure time of the next frame indicates more stable exposure transition. On the contrary, the larger difference indicates a larger jump in the exposure transition, causing a flicker phenomenon. Therefore, in this embodiment of this application, the absolute value of the difference between the exposure time of the current frame and the exposure time of the next frame is adjusted to be less than or equal to the first threshold, so that transition between the current frame image and the next frame image can be smoother, to avoid an inter-frame flicker.

With reference to the first aspect, in some implementations of the first aspect, the obtaining a current frame image includes: obtaining a luminance value of each pixel in the current frame image; calculating a row average luminance value of each row of pixels in the current frame image based on the luminance value of each pixel; and determining, based on the row average luminance value, that the current frame image includes the flickering line.

In this embodiment of this application, the row average luminance value of each row of pixels in the current frame image is calculated based on the luminance value of each pixel in the current frame image, and then it is determined based on the row average luminance value that the current frame image includes the flickering line, to improve accuracy of determining the flickering line.

With reference to the first aspect, in some implementations of the first aspect, the determining, based on the row average luminance value, that the current frame image includes the flickering line includes: fitting the row average luminance value based on a target function to obtain a fitting function, where the target function is a function formed by an absolute value of a sine function; and if a fitting degree of the fitting function is greater than or equal to a second threshold, determining that the current frame image includes the flickering line.

In this embodiment of this application, when it is determined based on the row average luminance value that the current frame image includes the flickering line, the row average luminance value may be fitted based on the function formed by the absolute value of the sine function to obtain the fitting function; and when the fitting degree of the fitting function reaches a specific threshold, it is determined that the current frame image includes the flickering line, to improve accuracy of determining the flickering line.

With reference to the first aspect, in some implementations of the first aspect, the determining, based on the current frame image, an interference source frequency that causes the flickering line includes: determining the interference source frequency according to the fitting function.

In this embodiment of this application, the row average luminance value of the current frame image is fitted to obtain the fitting function, and then the interference source frequency causing the flickering line is determined based on the fitting function, to detect an interference source with any frequency. In this way, the image processing method can be applied to more scenarios, thereby improving an image processing capability and a correction range.

With reference to the first aspect, in some implementations of the first aspect, the method further includes: performing flicker correction on the current frame image based on the luminance value of each pixel and the fitting function.

In this embodiment of this application, flicker correction may be performed on the current frame image based on the luminance value of each pixel and the fitting function, to improve quality of the current frame image.

With reference to the first aspect, in some implementations of the first aspect, the performing flicker correction on the current frame image includes: calculating an initial correction luminance value of each pixel based on the luminance value of each pixel and the fitting function; calculating a global average luminance value of the current frame image based on the row average luminance value; calculating a final correction luminance value of each pixel based on the initial correction luminance value of each pixel, the global average luminance value, and a row lowest luminance value; and performing luminance correction on each pixel based on the final correction luminance value of each pixel.

In this embodiment of this application, when flicker correction is performed on the current frame image, non-linear restoration is first performed on the luminance value of each pixel based on the luminance value of each pixel and the fitting function to obtain the initial correction luminance value of each pixel, thereby improving efficiency and accuracy of flicker correction performed on the current frame image. Then, luminance compensation is performed on each pixel based on the initial correction luminance value, the global average luminance value, and the row lowest luminance value, to avoid a flicker phenomenon between different images, thereby implementing overall smooth luminance. Finally, luminance correction is performed on each pixel based on the final correction luminance value of each pixel, to improve quality of the current frame image and implement optimal overall visual effect of the current frame image.

According to a second aspect, an image processing apparatus is provided, including: an obtaining module, configured to obtain a current frame image, where the current frame image includes a flickering line; and a processing module, configured to: determine, based on the current frame image, an interference source frequency that causes the flickering line; and adjust an exposure time of a next frame based on the interference source frequency to obtain a next frame image that does not include a flickering line.

With reference to the second aspect, in some implementations of the second aspect, the processing module is further configured to adjust the exposure time of the next frame based on the interference source frequency to meet the following formula:

$$T_{AE} = \frac{n}{2f}$$

Herein, $T_{AE}$ is the exposure time of the next frame, $f$ is the interference source frequency, and n is a positive integer.

With reference to the second aspect, in some implementations of the second aspect, the obtaining module is further configured to obtain an exposure time of a current frame; and the processing module is further configured to adjust the exposure time of the next frame based on the interference source frequency, so that an absolute value of a difference between the exposure time of the current frame and the exposure time of the next frame is less than or equal to a first threshold.

With reference to the second aspect, in some implementations of the second aspect, the obtaining module is further configured to obtain a luminance value of each pixel in the current frame image; and the processing module is further configured to: calculate a row average luminance value of each row of pixels in the current frame image based on the luminance value of each pixel; and determine, based on the row average luminance value, that the current frame image includes the flickering line.

With reference to the second aspect, in some implementations of the second aspect, the processing module is further configured to: fit the row average luminance value based on a target function to obtain a fitting function, where the target function is a function formed by an absolute value of a sine function; and if a fitting degree of the fitting function is greater than or equal to a second threshold, determine that the current frame image includes the flickering line.

With reference to the second aspect, in some implementations of the second aspect, the processing module is further configured to determine the interference source frequency based on the fitting function.

With reference to the second aspect, in some implementations of the second aspect, the processing module is further configured to perform flicker correction on the current frame image based on the luminance value of each pixel and the fitting function.

With reference to the second aspect, in some implementations of the second aspect, the processing module is further configured to: calculate an initial correction luminance value of each pixel based on the luminance value of each pixel and the fitting function; calculate a global average luminance value of the current frame image based on the row average luminance value; calculate a final correction luminance value of each pixel based on the initial correction luminance value of each pixel, the global average luminance value, and a row lowest luminance value; and perform luminance correction on each pixel based on the final correction luminance value of each pixel.

According to a third aspect, a vehicle is provided, including the apparatus according to the second aspect or any possible implementation of the second aspect.

According to a fourth aspect, a computer program product including an instruction is provided. When the computer program product is run on a computer, the computer is enabled to perform the method according to the first aspect or any implementation of the first aspect.

According to a fifth aspect, a computer-readable storage medium is provided. The computer-readable storage medium stores program code to be executed by a device. The program code includes instructions used to perform the method according to the first aspect or any possible implementation of the first aspect.

According to a sixth aspect, a chip is provided. The chip includes a processor and a data interface. The processor reads, by using the data interface, instructions stored in a memory, to perform the method according to the first aspect or any possible implementation of the first aspect.

Optionally, in an implementation, the chip may further include the memory. The memory stores the instructions. The processor is configured to execute the instructions stored in the memory. When the instructions are executed, the processor is configured to perform the method according to the first aspect or any possible implementation of the first aspect.

**BRIEF DESCRIPTION OF DRAWINGS**

FIG. 1 is an example diagram of an image including a flickering line according to an embodiment of this application;
FIG. 2 is an example diagram of a system architecture according to an embodiment of this application;
FIG. 3 is an example diagram of an image processing method according to an embodiment of this application;
FIG. 4 is an example diagram of an interference source signal waveform and a light energy waveform corresponding to the interference source signal waveform according to an embodiment of this application;
FIG. 5 is an example diagram of a method for performing flicker correction on a current frame image according to an embodiment of this application;

FIG. 6 is an example diagram of an overall image processing procedure according to an embodiment of this application;

FIG. 7 is an example diagram of an image processing apparatus according to an embodiment of this application; and

FIG. 8 is an example block diagram of a hardware structure of an image processing apparatus according to an embodiment of this application.

## DESCRIPTION OF EMBODIMENTS

For ease of understanding, background technologies in the embodiments of this application are first described in detail.

Currently, a complementary metal oxide semiconductor (complementary metal oxide semiconductor, CMOS) image sensor is widely used in common image sensors because the CMOS image sensor has favorable features such as flexible image capture, high sensitivity, and low power consumption. However, an exposure manner used by the CMOS image sensor is progressive exposure. Exposure times of all pixels are the same. In other words, pixels at the same row have the same exposure start points and the same exposure times. Therefore, all pixels at the same row receive the same energy. Although exposure times are the same between different rows, exposure start points are different. Therefore, the energy received between different rows is not necessarily the same. If different energy is received between different rows, an obtained image shows periodic bright and dark lines, that is, flickering lines appear.

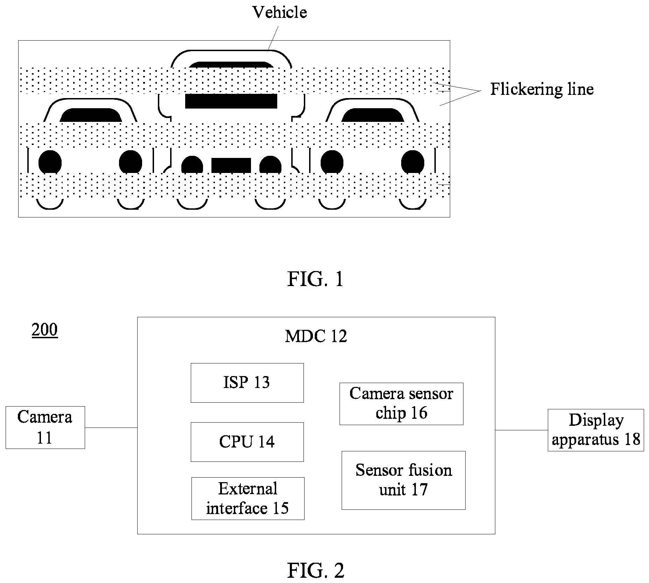

If the image includes the flickering lines, quality of the image is degraded, thereby further reducing a recognition rate for content in the image. In some fields, a relatively low recognition rate for the content in the image may cause a specific safety risk. For example, in the self-driving field, information in each frame image is extremely important for artificial intelligence (artificial intelligence, AI) recognition. If the image includes the flickering line, as shown in FIG. 1, a vehicle or other road information in the image cannot be recognized by using an AI recognition algorithm, resulting in a serious traffic accident.

In the conventional technologies, a flicker correction manner is usually used to correct an image frame by frame to remove flickering lines in the image, thereby improving image quality. Although the image quality can be improved to some extent through flicker correction performed frame by frame, the image quality in this case is still different from image quality without interference.

To resolve the foregoing problem, this application provides an image processing method. An interference source frequency is determined based on a current frame image including a flickering line. Then, an exposure time of a next frame is adjusted based on the interference source frequency. Therefore, impact of an interference source on an image can be fundamentally avoided, thereby improving image quality.

The embodiments of this application may be applied to the traffic road field, the self-driving field, and the aerospace and navigation field. This is not limited in this application.

To better understand the solutions in the embodiments of this application, before the method is described, the system architecture in this embodiment of this application is first briefly described with reference to FIG. 2.

FIG. 2 is an example diagram of a system architecture according to an embodiment of this application. The system architecture 200 may be applied to a self-driving vehicle, to collect information such as a driving environment or a road condition in an image manner and process the collected image. Alternatively, the system architecture 200 may be applied to another apparatus or device that needs to obtain a high-quality image. This is not limited in this application.

As shown in FIG. 2, the system architecture 200 includes a camera 11, a mobile data center (move data center, MDC) 12, and a display apparatus 18. The MDC 12 specifically includes a plurality of module components such as an image signal processor (image signal processor, ISP) 13, a central processing unit (central processing unit, CPU) 14, an external interface 15, a camera sensor chip 16, and a sensor fusion unit 17. The MDC 12 is separately connected to the camera 11 and the display apparatus 18 through the external interface 15.

Specifically, the camera 11 is a camera without an ISP, and is configured to obtain an image.

The MDC 12 is configured to process the image obtained by the camera 11.

The ISP 13 is integrated in the MDC 12, and is configured to perform related image processing. For example, in this embodiment of this application, the ISP 13 may be configured to recognize whether a current frame image includes a flickering line. When the current frame image includes the flickering line, the ISP 13 may be configured to perform flicker correction on the current frame image, and may be further configured to perform flicker avoidance processing on a next frame image.

The CPU 14 is configured to perform serial and parallel processing for various tasks.

The external interface 15 is used by the MDC 12 to connect to and communicate with related peripherals (for example, the camera 11 and the display apparatus 18).

The camera sensor chip 16 is configured to perform related processing such as segmentation and recognition on content (information such as a portrait and a scene) in an image.

The sensor fusion unit 17 is configured to: perform fusion calculation on sensor units of all the peripherals of the MDC 12, and output a final control policy. For example, if the system architecture 200 is used in the self-driving field, the sensor fusion unit 17 may perform fusion calculation on data of an image sensor, a speed sensor, a temperature sensor, a torque sensor, and the like of the peripherals of the MDC 12, and output a final vehicle control policy.

The display apparatus 18 is configured to display the processed image in a form of a picture or a video.

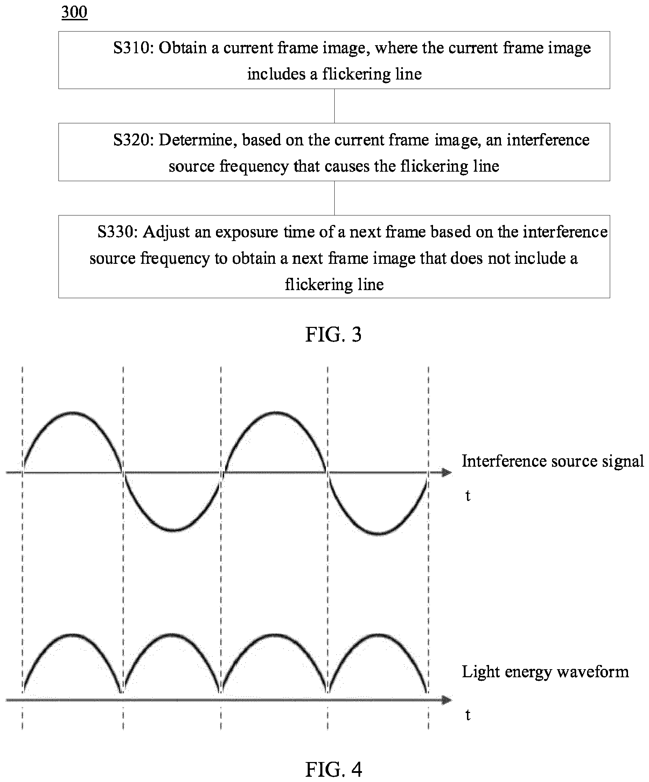

FIG. 3 is an example diagram of an image processing method according to an embodiment of this application. It should be understood that the method 300 may be applied to the system architecture 200. The method 300 includes steps S310 to S330. The following describes these steps in detail.

S310: Obtain a current frame image. The current frame image includes a flickering line.

Optionally, the current frame image may be obtained from an image sensor, or may be obtained from another image collection apparatus. This is not limited in this application. It should be understood that, in an actual operation, an image is obtained frame by frame. A currently obtained image may be denoted as the current frame image. An image obtained at a next moment may be denoted as a next frame image.

It should be understood that, when the current frame image is obtained, luminance distribution of the current frame image may be first analyzed, to determine that the current frame image includes a flickering line. Optionally, the following manner may be used to determine that the current frame image includes the flickering line: obtaining a luminance value of each pixel in the current frame image; calculating a row average luminance value of each row of pixels in the current frame image based on the luminance value of each pixel; and determining, based on the row average luminance value, that the current frame image includes the flickering line.

The foregoing process may also be understood as follows: When the current frame image is obtained, it may be first determined whether the current frame image includes the flickering line. Specifically, when it is determined based on the row average luminance value that the current frame image includes the flickering line, if distribution of the row average luminance values meets a requirement, it is determined that the current frame image includes the flickering line; or if distribution of the row average luminance values does not meet a requirement, it is determined that the current frame image does not include the flickering line. It should be understood that, if it is determined that a current frame includes the flickering line, steps S320 and S330 may continue to be performed. Correspondingly, if it is determined that the current frame does not include the flickering line, the next frame image may continue to be collected.

It should be understood that an image obtained under impact from an interference source usually includes a flickering line. A root cause of this is that luminance of the image is different because light energy is different on different rows, and different light energy is received between different rows. FIG. 4 is an example diagram of an interference source signal waveform and a light energy waveform corresponding to the interference source signal waveform according to an embodiment of this application. It should be understood that an interference source signal generally has a sine wave that meets a specific frequency. Light energy is not directional. Therefore, the corresponding light energy waveform is shown in FIG. 4. Distribution of the light energy may also be considered as luminance distribution of different rows in an image including a flickering line. In addition, it can be easily learned that the luminance distribution of different rows meets a function formed by an absolute value of a sine function.

Therefore, in an actual operation, if a luminance distribution condition of different rows in the obtained current frame image conforms to the function formed by the absolute value of the sine function, it may be considered that the current frame image includes the flickering line.

Specifically, row average luminance values of different rows in the obtained current frame image may be fitted based on a target function to obtain a fitting function. If a fitting degree of the fitting function is greater than or equal to a second threshold, it is determined that the current frame image includes the flickering line. The target function is a function formed by the absolute value of the sine function.

It should be understood that, because fitting of the fitting function is implemented in a function form formed by the absolute value of the sine function, the fitting function obtained through fitting the row average luminance value meets Formula (1):

$$L = A * \left| \sin(wt + \theta) \right| + B \tag{1}$$

Herein, L is a luminance value, A is a wave crest of a sine wave, B denotes a luminance offset, t is a time variable and $t \in [0, t'_{AE}]$, $t'_{AE}$ is an exposure time of the current frame, θ is an initial time offset of the function, and w is an angular frequency of a flicker.

After the foregoing fitting function is obtained, the fitting function is compared with the original row average luminance value to determine a fitting degree. If the fitting degree meets a specific threshold, it may be considered that the current frame image includes the flickering line.

In this embodiment of this application, when it is determined based on the row average luminance value that the current frame image includes the flickering line, the row average luminance value may be fitted based on the function formed by the absolute value of the sine function to obtain the fitting function; and when the fitting degree of the fitting function reaches a specific threshold, it is determined that the current frame image includes the flickering line, to improve accuracy of determining the flickering line.

It should be understood that the foregoing manner of determining that the current frame includes the flickering line is merely an example. In an actual operation, it may be further determined in another existing manner that the current frame includes the flickering line. This is not limited in this application.

S320: Determine, based on the current frame image, an interference source frequency that causes the flickering line.

Optionally, in this embodiment of this application, the interference source frequency may be determined based on the foregoing fitting function.

$$T = \frac{\pi}{w}$$

Specifically, for the fitting function $L = A^*|\sin(wt+\theta)| + B$, a period is $\qquad$ . Therefore, a period of an

$$2T = \frac{2\pi}{w} \qquad\qquad f = \frac{w}{2\pi}$$

interference source is $\qquad$, and the interference source frequency is $\qquad$ .

It should be understood that, in some fields such as the self-driving field, various types of interference sources such as a traffic light, a signal light, and a vehicle tail light usually have unfixed frequencies, and usually have diversified luminance and light energy frequencies. To prevent an image from being affected by an interference source or to reduce impact from an interference source, an in-vehicle camera should be capable of performing detection on a full frequency band (1 Hz to dozens of kHz) and performing corresponding avoidance processing. In this embodiment of this application, the row average luminance value of the current frame image is fitted to obtain the fitting function, and then the interference source frequency causing the flickering line is determined based on the fitting function, to detect an interference source with any frequency. In this way, the image processing method can be applied to more scenarios, thereby improving an image processing capability.

S330: Adjust an exposure time of a next frame based on the interference source frequency to obtain a next frame image that does not include a flickering line.

In this embodiment of this application, if the current frame image has the flickering line, the interference source frequency that causes the flickering line may be determined based on the current frame image, and then the exposure time of the next frame image is adjusted based on the interference source frequency, so that the next frame image does not include the flickering line. Therefore, impact of an interference source on an image can be fundamentally avoided, thereby improving image quality. In addition, there is no need to correct each frame image that includes a flickering line, thereby reducing a burden on the computer.

It should be understood that a flicker can be avoided when the exposure time is adjusted to be an integral multiple of a light energy period. The light energy period is a reciprocal of a light energy frequency. The light energy frequency is twice the interference source frequency.

Therefore, the exposure time of the next frame may be adjusted based on the interference source frequency to meet Formula (2):

$$T_{AE} = \frac{n}{2f}$$

$$(2)$$

Herein, $T_{AE}$ is the exposure time of the next frame, $f$ is the interference source frequency, and n is a positive integer. In other words, the exposure time of the next frame is adjusted to be an integral multiple of the light energy period, so that the flickering line can be avoided in the next frame image, thereby improving image quality.

It should be further understood that a smaller absolute value of a difference between the exposure time of the current frame and the exposure time of the next frame indicates more stable exposure transition. On the contrary, a larger difference indicates a larger jump in the exposure transition, causing a flicker phenomenon.

Therefore, optionally, the method 300 may further include: obtaining the exposure time of the current frame; and adjusting the exposure time of the next frame based on the interference source frequency, so that the absolute value of the difference between the exposure time of the current frame and the exposure time of the next frame is less than or equal to a first threshold. Alternatively, the absolute value of the difference between the exposure time of the current frame and the exposure time of the next frame uses an extremely small value. In this way, transition between the current frame image and the next frame image can be smoother, to avoid an inter-frame flicker.

Optionally, the method 300 may further include: performing flicker correction on the current frame image based on the luminance value of each pixel and the fitting function.

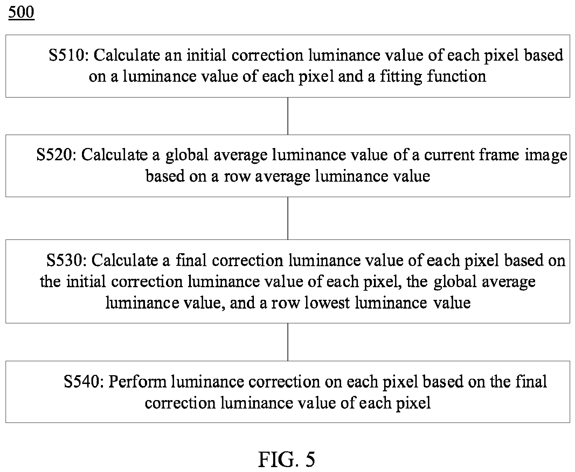

Specifically, FIG. 5 is an example diagram of a method for performing flicker correction on a current frame image according to an embodiment of this application. The method 500 includes steps S510 to S540. The following describes these steps in detail.

S510: Calculate an initial correction luminance value of each pixel based on the luminance value of each pixel and the fitting function.

Specifically, the fitting function using a time as a variable may be first converted into a fitting function using a row as a variable.

It should be understood that, for an image of x horizontal pixels * y vertical pixels, $t'_{AE}$ is the exposure time of the current frame, and there are $2*t'_{AE}*f$ flickering periods at the interference source frequency $f$. Each period corresponds to $\dfrac{y}{2*t'_{AE}*f}$ pixels, that is, each period corresponds to $\dfrac{y}{2*t'_{AE}*f}$ rows of pixels. In this case, $w = 2\pi\dfrac{t'_{AE}*f}{y}$ .

Further, the initial correction luminance value of each pixel may be calculated according to the following formula (3):

$$L_1 = L_{i,j} - A * \left| \sin(2\pi \frac{t'_{AE}*f}{y} i + \theta) \right| \tag{3}$$

Herein, $L_{i,j}$ is an original luminance value of a pixel in an $i^{th}$ row and a $j^{th}$ column, $L_1$ is a luminance value of the pixel in the $i^{th}$ row and the $j^{th}$ column after initial correction, $i \in [0, y]$, $i$ is a positive integer, and $\theta \in [0, \pi)$.

S520: Calculate a global average luminance value of the current frame image based on the row average luminance value.

Specifically, the global average luminance value of the current frame image may be calculated according to Formula (4):

$$\overline{L} = \frac{\sum_1^y \overline{L_{(i)}}}{y} \tag{4}$$

Herein, L is a global average luminance value, and $\overline{L_{(i)}}$ is a row average luminance value of pixels in the $i^{th}$ row.

S530: Calculate a final correction luminance value of each pixel based on the initial correction luminance value of each pixel, the global average luminance value, and a row lowest luminance value.

In this embodiment of this application, to keep overall luminance of the entire image unchanged and ensure an optimal state of image effect, additional compensation needs to be performed on the initial correction luminance value of the current frame, so that global average luminance of the current frame remains unchanged.

Specifically, the final correction luminance value of each pixel may be calculated according to Formula (5):

$$L_2 = L_1 + \overline{L} - B \tag{5}$$

Herein, $L_2$ is a luminance value of the pixel in the $i^{th}$ row and the $j^{th}$ column after final correction, and B is a row luminance offset or may be considered as a row lowest luminance value.

S540: Perform luminance correction on each pixel based on the final correction luminance value of each pixel.

Optionally, in an actual operation, luminance compensation may be first performed, and then the final correction luminance value is obtained based on the compensated luminance value and the fitting function. This is not limited in this application.

In this embodiment of this application, when flicker correction is performed on the current frame image, non-linear restoration is first performed on the luminance value of each pixel based on the luminance value of each pixel and the fitting function to obtain the initial correction luminance value of each pixel, thereby improving efficiency and accuracy of flicker correction performed on the current frame image. Then, luminance compensation is performed on each pixel based on the initial correction luminance value, the global average luminance value, and the row lowest luminance value, to avoid a flicker phenomenon between different images, thereby implementing overall smooth luminance. Finally, luminance correction is performed on each pixel based on the final correction luminance value of each pixel, to improve quality of the current frame image and implement optimal overall visual effect of the current frame image.

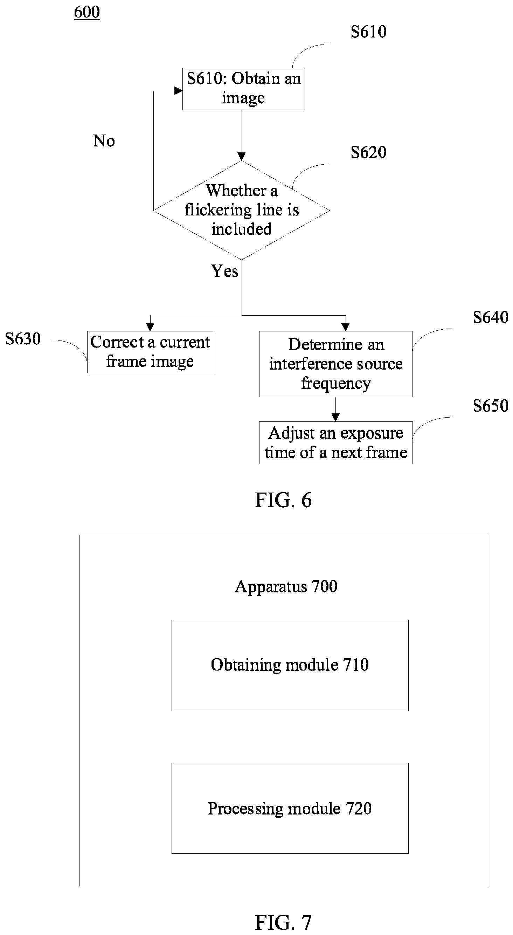

Preferably, to improve image quality and implement optimal overall visual effect of the image, in an actual operation, if the current frame image includes the flickering line, flicker correction performed on the current frame image, flicker avoidance performed on the next frame image, and inter-frame flicker avoidance can be implemented at the same time. The following describes a preferred solution of this application in detail with reference to FIG. 6.

FIG. 6 is an example diagram of an overall image processing procedure according to an embodiment of this application. The procedure 600 includes steps S610 to S650. The following describes these steps in detail.

S610: Obtain an image.

In an actual operation, the image is collected frame by frame. The currently obtained image may be denoted as a current frame image. In other words, a to-be-obtained next image may be denoted as a next frame image.

S620: Determine whether the current frame image includes a flickering line.

Specifically, after the current frame image is obtained, luminance distribution of pixels in the current frame image is analyzed, to determine whether the current frame image includes the flickering line. A specific manner of determining is described in detail above. Details are not described herein again.

It should be understood that, if the current frame image includes the flickering line, steps S630 to S650 continue to be performed; or if the current frame image does not include the flickering line, S610 may be performed to obtain a next frame image.

S630: Correct the current frame image.

In this embodiment, after it is determined that the current frame image includes the flickering line, flicker correction is performed on the current frame image. A specific flicker correction manner is described in detail above. Details are not described herein again.

S640: Determine an interference source frequency.

In this embodiment, after it is determined that the current frame image includes the flickering line, the interference source frequency is determined based on the current frame image. A manner of determining the interference source frequency is described in detail above. Details are not described herein again.

S640: Adjust an exposure time of a next frame.

In this embodiment, after the interference source frequency is determined, the exposure time of the next frame further needs to be adjusted based on the interference source frequency, so that the exposure time of the next frame meets the following formula:

$$T_{AE} = \frac{n}{2f}$$

In addition, an absolute value of a difference between an exposure time of the current frame and the exposure time of the next frame is less than or equal to a first threshold, so that the next frame image does not include a flickering line and no inter-frame flicker exists between the current frame and the next frame image.

In this embodiment, flicker correction is performed on the current frame image that includes the flickering line, and flicker avoidance and inter-frame avoidance are performed on the next frame image, to improve image quality and implement optimal overall visual effect of the image.

FIG. 7 is an example diagram of an image processing apparatus according to an embodiment of this application. The apparatus 700 includes an obtaining module 710 and a processing module 720. The obtaining module 710 is configured to obtain a current frame image. The current frame image includes a flickering line. The processing module 720 is configured to: determine, based on the current frame image, an interference source frequency that causes the flickering line; and adjust an exposure time of a next frame based on the interference source frequency to obtain a next frame image that does not include a flickering line.

Optionally, the processing module 720 may be further configured to adjust the exposure time of the next frame based on the interference source frequency to meet the following formula:

$$T_{AE} = \frac{n}{2f}$$

Herein, $T_{AE}$ is the exposure time of the next frame, $f$ is the interference source frequency, and n is a positive integer.

9

Optionally, the obtaining module 710 may be further configured to obtain an exposure time of a current frame; and the processing module 820 may be further configured to adjust the exposure time of the next frame based on the interference source frequency, so that an absolute value of a difference between the exposure time of the current frame and the exposure time of the next frame is less than or equal to a first threshold.

Optionally, the obtaining module 710 may be further configured to obtain a luminance value of each pixel in the current frame image; and the processing module 720 may be further configured to: calculate a row average luminance value of each row of pixels in the current frame image based on the luminance value of each pixel; and determine, based on the row average luminance value, that the current frame image includes the flickering line.

Optionally, the processing module 720 may be further configured to: fit the row average luminance value based on a target function to obtain a fitting function, where the target function is a function formed by an absolute value of a sine function; and if a fitting degree of the fitting function is greater than or equal to a second threshold, determine that the current frame image includes the flickering line.

Optionally, the processing module 720 may be further configured to determine the interference source frequency based on the fitting function.

Optionally, the processing module 720 may be further configured to perform flicker correction on the current frame image based on the luminance value of each pixel and the fitting function.

Optionally, the processing module 720 may be further configured to: calculate an initial correction luminance value of each pixel based on the luminance value of each pixel and the fitting function; calculate a global average luminance value of the current frame image based on the row average luminance value; calculate a final correction luminance value of each pixel based on the initial correction luminance value of each pixel, the global average luminance value, and a row lowest luminance value; and perform luminance correction on each pixel based on the final correction luminance value of each pixel.

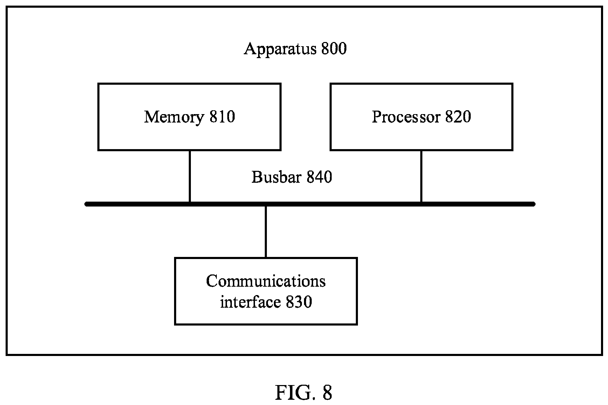

FIG. 8 is an example block diagram of a hardware structure of an image processing apparatus according to an embodiment of this application. The apparatus 800 (the apparatus 800 may be specifically a computer device) includes a memory 810, a processor 820, a communications interface 830, and a bus 840. The memory 810, the processor 820, and the communications interface 830 implement mutual communication connections through the bus 840.

The memory 810 may be a read-only memory (read-only memory, ROM), a static storage device, a dynamic storage device, or a random access memory (random access memory, RAM). The memory 810 may store a program. When the program stored in the memory 810 is executed by the processor 820, the processor 820 is configured to perform the steps of the planning method in the embodiments of this application.

The processor 820 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the correction method in the method embodiments of this application.

The processor 820 may be alternatively an integrated circuit chip and has a signal processing capability. In an implementation process, steps in the correction method in this application may be implemented by using a hardware integrated logic circuit in the processor 820, or by using instructions in a form of software.

The processor 820 may be alternatively a general-purpose processor, a digital signal processor (digital signal processing, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in the embodiments of this application. The general-purpose processor may be a microprocessor, or the processor may be any conventional processor or the like. The steps of the methods disclosed with reference to the embodiments of this application may be directly executed and completed by a hardware decoding processor, or may be executed and completed by a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 810. The processor 820 reads information in the memory 810, and in combination with hardware of the processor 820, completes the functions that need to be performed by the modules included in the planning apparatus in the embodiments of this application, or performs the correction method in the method embodiments of this application.

The communications interface 830 uses a transceiver apparatus, for example but not limited to, a transceiver, to implement communication between the apparatus 800 and another device or a communications network.

The bus 840 may include a path for transmitting information between the components (for example, the memory 810, the processor 820, and the communications interface 830) of the apparatus 800.

An embodiment of this application further provides a vehicle, including the foregoing apparatus 700. The apparatus 700 may perform the method 300 or 600. It should be understood that the vehicle may be an intelligent vehicle, a new energy vehicle, a connected vehicle, an intelligent driving vehicle, or the like. This is not specifically limited in this application.

A person of ordinary skill in the art may be aware that, in combination with units and algorithm steps in the examples described in the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in the embodiments of this application may be integrated into one processing unit, each of the units may exist alone physically, or two or more units are integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An image processing method, comprising:

   obtaining a current frame image, wherein the current frame image comprises a flickering line;
   determining, based on the current frame image, an interference source frequency that causes the flickering line; and
   adjusting an exposure time of a next frame based on the interference source frequency to obtain a next frame image that does not comprise a flickering line.

2. The method according to claim 1, wherein the adjusting an exposure time of a next frame based on the interference source frequency to obtain a next frame image that does not comprise a flickering line comprises:

   adjusting the exposure time of the next frame based on the interference source frequency to meet the following formula:

$$T_{AE} = \frac{n}{2f},$$

wherein
$T_{AE}$ is the exposure time of the next frame, *f* is the interference source frequency, and n is a positive integer.

3. The method according to claim 1 or 2, wherein the method further comprises:

obtaining an exposure time of a current frame; and
adjusting the exposure time of the next frame based on the interference source frequency, so that an absolute value of a difference between the exposure time of the current frame and the exposure time of the next frame is less than or equal to a first threshold.

4. The method according to any one of claims 1 to 3, wherein the obtaining a current frame image comprises:

obtaining a luminance value of each pixel in the current frame image;
calculating a row average luminance value of each row of pixels in the current frame image based on the luminance value of each pixel; and
determining, based on the row average luminance value, that the current frame image comprises the flickering line.

5. The method according to claim 4, wherein the determining, based on the row average luminance value, that the current frame image comprises the flickering line comprises:

fitting the row average luminance value based on a target function to obtain a fitting function, wherein the target function is a function formed by an absolute value of a sine function; and
if a fitting degree of the fitting function is greater than or equal to a second threshold, determining that the current frame image comprises the flickering line.

6. The method according to claim 5, wherein the determining, based on the current frame image, an interference source frequency that causes the flickering line comprises:
determining the interference source frequency based on the fitting function.

7. The method according to claim 5 or 6, wherein the method further comprises:
performing flicker correction on the current frame image based on the luminance value of each pixel and the fitting function.

8. The method according to claim 7, wherein the performing flicker correction on the current frame image comprises:

calculating an initial correction luminance value of each pixel based on the luminance value of each pixel and the fitting function;
calculating a global average luminance value of the current frame image based on the row average luminance value;
calculating a final correction luminance value of each pixel based on the initial correction luminance value of each pixel, the global average luminance value, and a row lowest luminance value; and
performing luminance correction on each pixel based on the final correction luminance value of each pixel.

9. An image processing apparatus, comprising:

an obtaining module, configured to obtain a current frame image, wherein the current frame image comprises a flickering line; and
a processing module, configured to: determine, based on the current frame image, an interference source frequency that causes the flickering line; and adjust an exposure time of a next frame based on the interference source frequency to obtain a next frame image that does not comprise a flickering line.

10. The apparatus according to claim 9, wherein the processing module is further configured to:

adjust the exposure time of the next frame based on the interference source frequency to meet the following formula:

$$T_{AE} = \frac{n}{2f},$$

wherein
$T_{AE}$ is the exposure time of the next frame, $f$ is the interference source frequency, and n is a positive integer.

11. The apparatus according to claim 9 or 10, wherein

the obtaining module is further configured to obtain an exposure time of a current frame; and
the processing module is further configured to adjust the exposure time of the next frame based on the interference source frequency, so that an absolute value of a difference between the exposure time of the current frame and the exposure time of the next frame is less than or equal to a first threshold.

12. The apparatus according to any one of claims 9 to 11, wherein

the obtaining module is further configured to obtain a luminance value of each pixel in the current frame image; and
the processing module is further configured to: calculate a row average luminance value of each row of pixels in the current frame image based on the luminance value of each pixel; and determine, based on the row average luminance value, that the current frame image comprises the flickering line.

13. The apparatus according to claim 12, wherein the processing module is further configured to: fit the row average luminance value based on a target function to obtain a fitting function, wherein the target function is a function formed by an absolute value of a sine function; and if a fitting degree of the fitting function is greater than or equal to a second threshold, determine that the current frame image comprises the flickering line.

14. The apparatus according to claim 13, wherein the processing module is further configured to: determine the interference source frequency based on the fitting function.

15. The apparatus according to claim 13 or 14, wherein the processing module is further configured to: perform flicker correction on the current frame image based on the luminance value of each pixel and the fitting function.

16. The apparatus according to claim 15, wherein the processing module is further configured to: calculate an initial correction luminance value of each pixel based on the luminance value of each pixel and the fitting function; calculate a global average luminance value of the current frame image based on the row average luminance value; calculate a final correction luminance value of each pixel based on the initial correction luminance value of each pixel, the global average luminance value, and a row lowest luminance value; and perform luminance correction on each pixel based on the final correction luminance value of each pixel.

17. An image processing apparatus, comprising a processor, wherein the processor is coupled to a memory;

the memory is configured to store instructions; and
the processor is configured to execute the instructions stored in the memory, so that the apparatus performs the method according to any one of claims 1 to 8.

18. A computer-readable medium, comprising instructions, wherein when the instructions are run on a processor, the processor is enabled to perform the method according to any one of claims 1 to 8.

Vehicle

Flickering line

**FIG. 1**

200

MDC 12

ISP 13

Camera sensor chip 16

Camera 11

CPU 14

External interface 15

Sensor fusion unit 17

Display apparatus 18

**FIG. 2**

300

| S310: Obtain a current frame image, where the current frame image includes a flickering line |
| :---: |

| S320: Determine, based on the current frame image, an interference source frequency that causes the flickering line |
| :---: |

| S330: Adjust an exposure time of a next frame based on the interference source frequency to obtain a next frame image that does not include a flickering line |
| :---: |

FIG. 3

Interference source signal

t

Light energy waveform

t

FIG. 4

500

| S510: Calculate an initial correction luminance value of each pixel based on a luminance value of each pixel and a fitting function |

| S520: Calculate a global average luminance value of a current frame image based on a row average luminance value |

| S530: Calculate a final correction luminance value of each pixel based on the initial correction luminance value of each pixel, the global average luminance value, and a row lowest luminance value |

| S540: Perform luminance correction on each pixel based on the final correction luminance value of each pixel |

FIG. 5

600

S610

S610: Obtain an image

No

S620

Whether a flickering line is included

Yes

S630

Correct a current frame image

Determine an interference source frequency

S640

Adjust an exposure time of a next frame

S650

FIG. 6

Apparatus 700

Obtaining module 710

Processing module 720

FIG. 7

Apparatus 800

Memory 810

Processor 820

Busbar 840

Communications
interface 830

FIG. 8

| | | |
|---|---|---|
| **INTERNATIONAL SEARCH REPORT** | | International application No. |
| | | **PCT/CN2021/117547** |

**A. CLASSIFICATION OF SUBJECT MATTER**

H04N 5/225(2006.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 图像, 当前帧, 闪烁, 条纹, 干扰, 频率, 曝光, 时间, 拟合, 曲线, 正弦, 平均, 亮度, 行, 周期, flicker, stripe? , adjust+, image, exposure, time, frequency, frame, brightness, mean, row, waveform, function, sin, curve, average, period, disturb+

**C. DOCUMENTS CONSIDERED TO BE RELEVANT**

| Category* | Citation of document, with indication, where appropriate, of the relevant passages | Relevant to claim No. |
|---|---|---|
| X | CN 110213497 A (CHENGDU WEIGUANG JIDIAN TECHNOLOGY CO., LTD.) 06 September 2019 (2019-09-06) description, paragraphs 68-89, 128-129, figures 1-6 | 1-4, 9-12, 17, 18 |
| Y | CN 110213497 A (CHENGDU WEIGUANG JIDIAN TECHNOLOGY CO., LTD.) 06 September 2019 (2019-09-06) description, paragraphs 68-89, 128-129, figures 1-6 | 5-8, 13-16 |
| Y | CN 111355864 A (ZHEJIANG DAHUA TECHNOLOGY CO., LTD.) 30 June 2020 (2020-06-30) description paragraphs 76-82, figures 1-8 | 5-8, 13-16 |
| A | CN 106973239 A (SAMSUNG ELECTRONICS CO., LTD.) 21 July 2017 (2017-07-21) entire document | 1-18 |
| A | US 2007146500 A1 (MAGNACHIP SEMICONDUCTOR LTD.) 28 June 2007 (2007-06-28) entire document | 1-18 |
| A | CN 106572345 A (FUJITSU LIMITED) 19 April 2017 (2017-04-19) entire document | 1-18 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 November 2021** | **25 November 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/117547**

| Patent document cited in search report | | | Publication date (day/month/year) | Patent family member(s) | | | Publication date (day/month/year) |
|---|---|---|---|---|---|---|---|
| CN | 110213497 | A | 06 September 2019 | None | | | |
| CN | 111355864 | A | 30 June 2020 | None | | | |
| CN | 106973239 | A | 21 July 2017 | US | 2017201668 | A1 | 13 July 2017 |
| | | | | US | 10404922 | B2 | 03 September 2019 |
| | | | | KR | 20170084947 | A | 21 July 2017 |
| US | 2007146500 | A1 | 28 June 2007 | TW | 200731165 | A | 16 August 2007 |
| | | | | TW | I345734 | B | 21 July 2011 |
| | | | | KR | 100721664 | B1 | 23 May 2007 |
| | | | | JP | 2007174678 | A | 05 July 2007 |
| | | | | JP | 4979369 | B2 | 18 July 2012 |
| | | | | US | 7965323 | B2 | 21 June 2011 |
| | | | | US | 2011242359 | A1 | 06 October 2011 |
| | | | | US | 8520094 | B2 | 27 August 2013 |
| CN | 106572345 | A | 19 April 2017 | JP | 2017076969 | A | 20 April 2017 |
| | | | | JP | 6784130 | B2 | 11 November 2020 |
| | | | | US | 2017104914 | A1 | 13 April 2017 |
| | | | | US | 9912878 | B2 | 06 March 2018 |

Form PCT/ISA/210 (patent family annex) (January 2015)

**REFERENCES CITED IN THE DESCRIPTION**

**Patent documents cited in the description**

- CN 202011084864